# EUROPEAN PATENT APPLICATION

(11) **EP 2 544 098 A2**
(43) Date of publication of application: **09.01.2013**
(21) Application number: 12174774.5
(22) Date of filing: 03.07.2012
(51) Int. Cl.: G06F 17/21, G06F 17/24, G06F 9/54

(54) **Method and apparatus for editing texts in mobile terminal**

(30) Priority: 04.07.2011 KR 20110065816
(71) Applicant: Samsung Electronics Co., Ltd., Suwon-si, Gyeonggi-do, 443-742 (KR)
(72) Inventor: Choi, Kang-Sik, 443-742 Gyeonggi-do (KR); Choi, Jung-Woo, 443-742 Gyeonggi-do (KR); Lee, Gi-Yong, 443-742 Gyeonggi-do (KR); Park, Eun-Young, 443-742 Gyeonggi-do (KR)
(74) Representative: Jenkins, Richard Gavin

(57) **Abstract**

A method and an apparatus for editing a text in a mobile terminal are provided. The method includes a copying step of changing a color of at least one text selected by a copy icon if the copy step is selected while displaying texts on a display, and storing the at least one color-changed text, and a pasting step of pasting a text selected from a list including at least one text stored in the copying step to a specific location on the display if the paste step is selected

## Description

### BACKGROUND OF THE INVENTION

### Field of the Invention:

The present invention relates to a method and apparatus for editing texts in a mobile terminal. More particularly, although not exclusively, the present invention relates to a text-editing method and apparatus for a mobile terminal, which is capable of allowing a user to conveniently edit texts by selecting multiple texts in a text-editing process of the mobile terminal.

### Description of the Related Art:

With recent developments in electronic and communication technologies, mobile terminals have evolved to include a variety of advanced functions. In other words, thanks to the development of wireless communication and data processing technologies, users may enjoy not only voice calls but also value-added functions such as Internet access, video communication, and video messaging, using their mobile terminals.

Mobile terminals are essential communication means in modern life, as a significant amount of communication takes place using the mobile terminals due to the widespread adoption of the mobile terminals.

Along with the development of the mobile terminals, there are a growing number of diverse services provided on the mobile terminals.

A text-editing function used for writing text messages provides a function of editing not only texts displayed on a mobile terminal over the Internet, but also all texts displayed on a display in a specific mode of the mobile terminal.

A text-editing function provided by mobile terminals of the related art may offer a function of selecting a text by touching the text on a display for a specific time or more, and copying the text by selecting a copying function, or of selecting a copying function among several functions displayed by touching a specific area on the display, and copying a text by selecting the text.

The copied text may be pasted to a specific location on the display.

The text-editing function provided by mobile terminals of the related art selects and copies only one text at a time through multiple processes, and pastes the copied text.

In other words, in order to copy and paste multiple texts, the copying and pasting functions should be annoyingly repeated several times, because only one text can be selected at a time. Moreover, a mobile terminal has a small size of screen, and corresponding input means is very simple (such as a touching input manner or a key inputting manner and so on); therefore, it is difficult to edit the displayed text efficiently.

### SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

Aspects of the present invention aim to address at least the above-mentioned problems and/or disadvantages and to provide at least the advantages described below. Accordingly, an aim of certain embodiments of the present invention is to provide a text-editing method and apparatus for a mobile terminal, capable of allowing a user to conveniently edit texts by selecting multiple texts in a text-editing process of the mobile terminal.

Another aim of certain embodiments of the present invention is to provide a text-editing method and apparatus for a mobile terminal, capable of providing a more familiar User Interface (UI) to a user by using an image (or icon) of a fluorescent pen used to select texts in the real world, in a text-editing process of the mobile terminal.

In accordance with an aspect of the present invention, a method for editing a text in a mobile terminal is provided. The method includes a copying step of changing a color of at least one text selected by a copy icon if the copy step is selected while displaying texts on a display, and storing the at least one color-changed text, and a pasting step of pasting a text selected from a list including at least one text stored in the copying step to a specific location on the display if the paste step is selected.

In accordance with another aspect of the present invention, an apparatus for editing a text in a mobile terminal is provided. The apparatus includes a display for displaying at least one text that is selected by a copy icon and whose color is changed in a copying step, and for displaying a list including the at least one text in a pasting step, and a controller adapted to control a change of color of at least one text selected by the copy icon and to control storing of the at least one color-changed text in the copying step, and adapted to control pasting of a text selected from the list including the at least one text to a specific location on the display in the pasting step.

Another aspect of the invention provides a computer program comprising instructions arranged, when executed, to implement a method and/or apparatus in accordance with any one of the above-described aspects. A further aspect provides machine-readable storage storing such a program.

Other aspects and advantages, and salient features of aspects and embodiments of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates a structure of a mobile terminal according to an exemplary embodiment of the present invention;
FIGs. 2A to 2C illustrate a process of editing texts in a mobile terminal according to an exemplary embodiment of the present invention;
FIGs. 3A to 3F illustrate a copying process in a text-editing process for a mobile terminal according to an exemplary embodiment of the present invention;
FIGs. 4A to 4C illustrate a canceling process in a text-editing process for a mobile terminal according to an exemplary embodiment of the present invention;
FIGs. 5A to 5D illustrate a pasting process in a text-editing process for a mobile terminal according to an exemplary embodiment of the present invention; and
FIG. 6 illustrates a process of shifting a location of an edit menu in a text-editing process for a mobile terminal according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

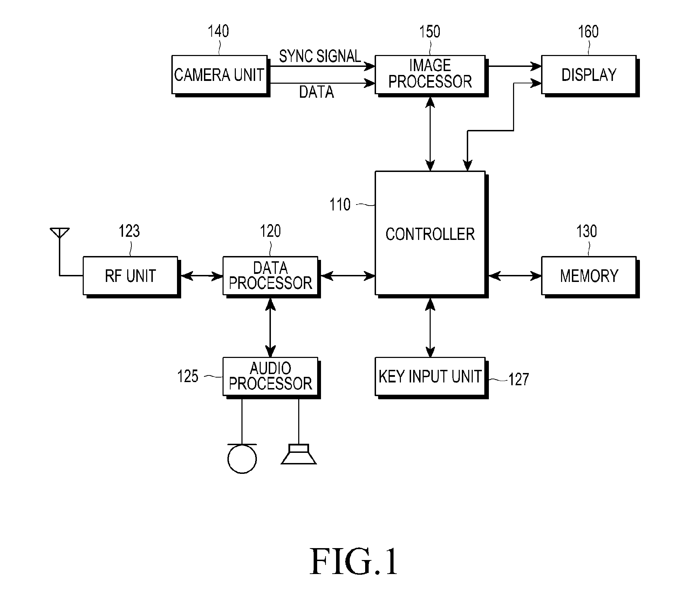

FIG. 1 illustrates a structure of a mobile terminal according to an exemplary embodiment of the present invention.

Referring to FIG. 1, a Radio Frequency (RF) unit 123 performs wireless communication for the mobile terminal. The RF unit 123 includes an RF transmitter for frequency up-converting and amplifying transmission signals, and an RF receiver for low-noise-amplifying and frequency down-converting received signals. A data processor 120 includes a transmitter for encoding and modulating the transmission signals, and a receiver for demodulating and decoding the received signals. In other words, the data processor 120 may include a modem and a codec. The codec includes a data codec for processing packet data and the like, and an audio codec for processing audio signals such as voice. An audio processor 125 plays received audio signals output from the audio codec in the data processor 120 using a speaker, and provides transmission audio signals picked up by a microphone to the audio codec in the data processor 120.

A key input unit 127 includes alphanumeric keys for inputting alphanumeric text information and function keys for setting various functions.

A memory 130 may include a program memory and a data memory. The program memory may store programs for controlling general operations of the mobile terminal, and a program used for editing texts by selecting multiple texts in a text-editing process of the mobile terminal.

In accordance with an exemplary embodiment of the present invention, the memory 130 stores multiple texts selected in the text-editing process.

A controller 110 controls the overall operations of the mobile terminal, and is adapted to control the other components (e.g. the image processor, the display, the memory, the data processor, the key input unit, the camera unit, the audio processor, and the RF unit) to achieve the various operations described below (including for example, change of icon, change of colour etc).

In accordance with an exemplary embodiment of the present invention, the controller 110 controls to display (i.e. controls the display of) an edit menu window on a display 160 if a specific area on the display 160 is touched for a specific time or more while displaying texts on the display 160. The edit menu window displayed on the display 160 may be relocatable.

If an edit icon and a cursor are located on a text for a specific time or more after a copy menu item was selected in the edit menu window, the controller 110 controls to change (i.e. controls the changing of) the edit icon to the copy icon. The controller 110 controls to change (i.e. controls the changing of) a color of at least one text selected by the copy icon and the cursor, and controls to store (i.e. controls the storing of) the color-changed text in the memory 130.

As for the at least one text selected by the copy icon and the cursor, a color of the text itself may be changed, or the text may be highlighted in a distinguishable color during its display. The change from the edit icon to the copy icon may be achieved by a change in color, and when the edit icon has a fluorescent pen shape, the copy icon may be displayed in a fluorescent pen shape of another color indicating a copying operation.

If the copy icon and the cursor are located on the color-changed text stored in the copying process for a specific time or more, then the copy icon is changed to a cancel icon and the controller 110 controls to change a color of the text selected by the cancel icon and the cursor to its original color, and controls to remove (i.e. controls the removal of) the text from the memory 130.

The change from the copy icon to the cancel icon may be achieved by a change in shape, and a fluorescent pen shape expressed as the copy icon may be changed to an eraser shape indicating a cancel operation during its display.

If a paste menu item is selected in the edit menu window, the controller 110 controls to display (i.e. controls the display of) a list including at least one text selected in the copying process, and controls to paste (i.e. controls the pasting of) a text selected from the list to a specific location on the display 160, in which the edit icon and the cursor are located.

If the edit icon and the cursor are shifted to a remove area on the display 160 after a text was selected from the list displayed in the pasting process, the controller 110 controls to remove (i.e. controls the removal of) the text from the memory 130.

The controller 110 may control to display a check box associated with each of at least one text in the list displayed in the pasting process, and select multiple texts based on the check boxes. When pasting the selected multiple texts to a specific area on the display 160, the controller 110 may control to paste the multiple texts in the selection order of the check boxes.

If a text in the list displayed in the pasting process is touched for a specific time or more, the controller 110 may control to remove the text.

A camera unit 140 includes a camera sensor for capturing image data and converting the captured optical signal into an electrical signal, and a signal processor for converting an analog image signal captured by the camera sensor into digital data. The camera sensor may be a Charge-Coupled Device (CCD), a Complementary Metal Oxide Semiconductor (CMOS) sensor, or the like. The signal processor may be realized by a Digital Signal Processor (DSP), or the like. The camera sensor and the signal processor may be realized in an integrated manner or in a separated manner.

An image processor 150 performs Image Signal Processing (ISP) for displaying image signals output from the camera unit 140 on the display 160, and the ISP performs functions such as gamma correction, interpolation, spatial variation, image effects, image scaling, Automatic White Balance (AWB), Automatic Exposure (AE), and Automatic Focusing (AF). The image processor 150 processes the image signals output from the camera unit 140 on a frame basis, and outputs the frame-based image data according to the characteristics and size of the display 160. The image processor 150, which includes a video codec, compresses frame image data displayed on the display 160 by preset coding, and restores (or decompresses) the compressed frame image data into its original frame image data. The video codec may include a Joint Photographic Experts Group (JPEG) codec, Moving Picture Experts Group 4 (MPEG4) codec, Wavelet codec, etc. Assuming that the image processor 150 includes an On-Screen Display (OSD) function, the controller 110 may control the image processor 150 to output OSD data according to the size of a screen on which the data is displayed.

The display 160 displays image signals output from the image processor 150 on its screen, and displays user data output from the controller 110. The display 160 may include a display device, such as a Liquid Crystal Display (LCD), an Organic Light-Emitting Diode (OLED), or the like. In this case, the display 160 may include a display controller, a memory for storing image data, and the display device. When realized in a touch screen manner, the display 160 may serve as an input unit as well. In this case, keys like those of the key input unit 127 may be displayed on the display 160.

In accordance with an exemplary embodiment of the present invention, the display 160 may display an edit menu window in the text-editing process, and may also display an edit icon and a cursor indicating their shift to a text to be edited.

The display 160 may display the cursor and a copy icon obtained by changing a color of the edit icon in the copying process, and may also display a text that is selected by the copy icon and the cursor whose color is changed.

The display 160 may display a cancel icon obtained by changing a shape of the copy icon in a canceling process, and may also display a text that is selected by the cancel icon and the cursor whose color is changed to its original color.

The display 160 may display a list including at least one text selected through the copying process, in the pasting process.

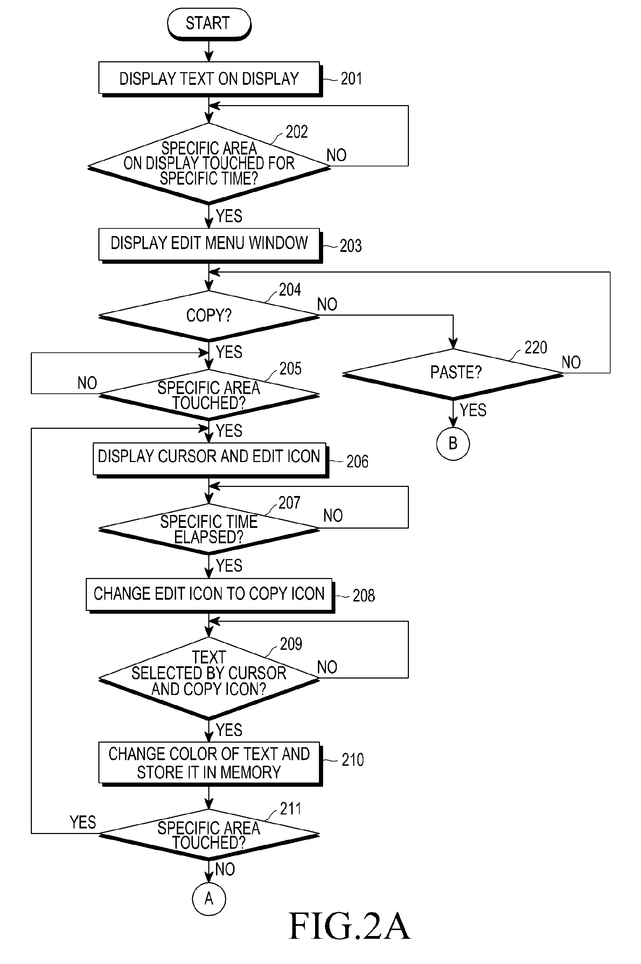

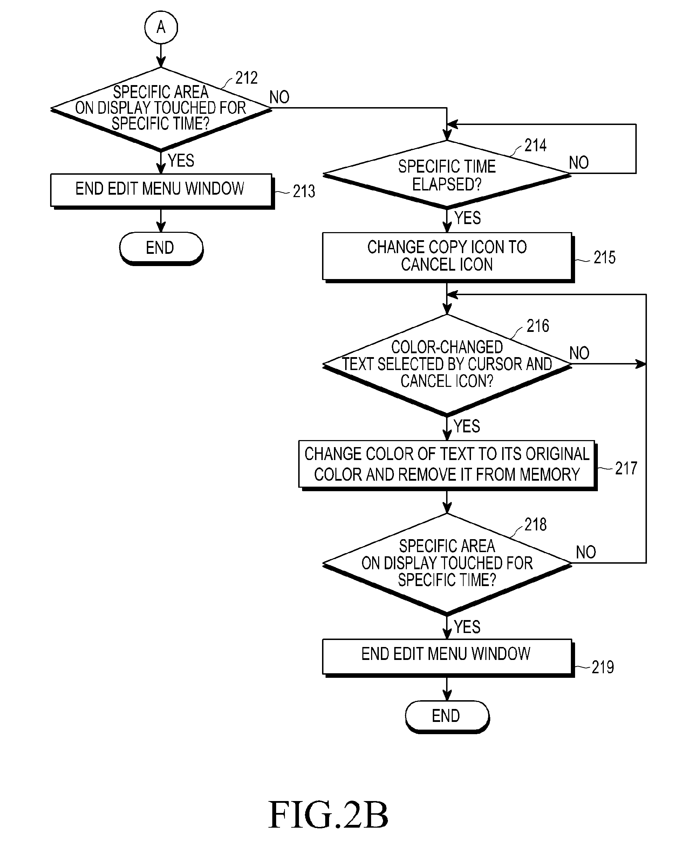

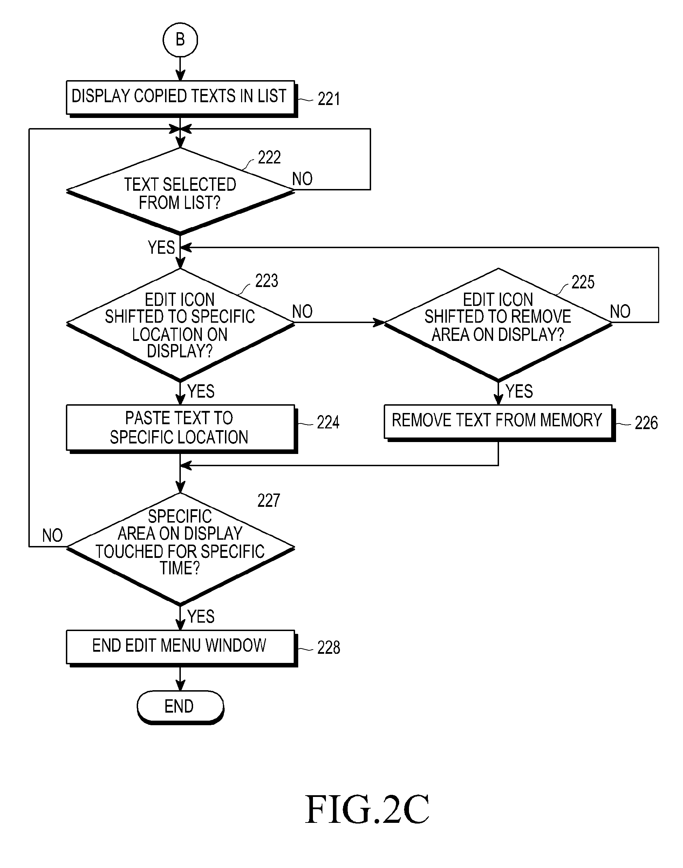

A text-editing operation in the mobile terminal will be described in detail with reference to FIGs. 2 to 6.

FIGs. 2A to 2C illustrate a process of editing texts in a mobile terminal according to an exemplary embodiment of the present invention.

The text-editing process will now be described with reference to FIGs. 1, and 2A to 2C.

Steps 201-213 of FIGs. 2A and 2B illustrate a copying process in the text-editing process according to an exemplary embodiment of the present invention.

Referring to FIG. 2A, if it is determined in step 202 that a specified area on the display 160 is touched for a specified time or more while a text(s) is displayed on the display 160 in step 201, the controller 110 controls to display an edit menu window including a copy menu item and a paste menu item on the display 160 in step 203.

In the alternative, if a specific key mounted in the mobile terminal is input or pushed for a specific time or more in step 202, the controller 110 may control to display the edit menu window on the display 160 in step 203.

If the copy menu item is selected in the edit menu window in step 204, the controller 110 controls to activate (i.e. controls the activation of) the copying process. If a specific area on the display 160 displaying texts is touched in step 205, the controller 110 controls to display the edit icon and the cursor on the display 160 in step 206. If a specific time has elapsed after the edit icon and the cursor were located on a text to be copied in step 207, the controller 110 controls to change (i.e. controls the change of) the edit icon to a copy icon in step 208.

In an exemplary embodiment of the present invention, the edit icon has a shape or an icon of a fluorescent pen used to underline important texts in the real world, and the displayed copy icon is obtained by changing a color of the fluorescent pen expressed as the edit icon.

If a text is selected by dragging the copy icon and the cursor in step 209, the controller 110 controls to change a color of the selected text, indicating the copy of the text, and stores the selected text in the memory 130 in step 210.

As to the text selected by dragging the copy icon and the cursor, a color of the text itself may be changed, or the text may be highlighted in a distinguishable color during its display, giving the effects of the fluorescent pen.

If a specific area on the display 160 is touched again in step 211, the controller 110 returns to step 206. By repeating steps 206 to 211, a user may select and copy at least one or multiple texts from among the texts displayed on the display 160.

Referring to FIG. 2B, if a specific area on the display 160 is touched for a specific time or more in step 212, the controller 110 controls to end (i.e. controls the ending of) the display of the edit menu window in step 213, thereby completing the text-editing process.

Steps 214-219 of FIG. 2B illustrate a canceling process in the text-editing process according to an exemplary embodiment of the present invention.

Referring to FIG. 2B, if a specific area on the display 160 is not touched for a specific time or more in step 212, the process proceeds to step 214. If it is determined in step 214 that the copy icon and the cursor are located for a specific time or more on a text whose color was changed to a color indicating the copy of the text on the display 160 in the copying process of FIG. 2A, the controller 110 controls to change the copy icon to a cancel icon in step 215. In this case, the controller 110 may control to change the copy icon expressed in the shape of the fluorescent pen to a cancel icon in the shape of an eraser during its display.

If it is determined in step 216 that a text, which is copied or whose color is changed, is selected by dragging the cancel icon and the cursor, then the controller 110 controls to change a color of the selected text to its original color, indicating the canceling of the copy, and removes the selected text from the memory 130 in step 217.

By repeating steps 216 to 217, the controller 110 may control to cancel (i.e. control the cancelling of) the copy of at least one or multiple texts.

If a specific area on the display 160 is touched for a specific time or more in step 218, the controller 110 controls to end the display of the edit menu window in step 219, thereby completing the text-editing process.

Steps 220-228 of FIGs. 2A and 2C illustrate a pasting process in the text-editing process according to an exemplary embodiment of the present invention.

Referring to FIGs. 2A and 2C, if a paste menu item included in the edit menu window is selected in step 220 shown in FIG. 2A, the controller 110 controls to display on the display 160 a list including at least one text copied in the copying process shown in FIG. 2A, in step 221 of FIG. 2C.

If the copied text is selected from the list in step 222, the controller 110 determines in step 223 whether the edit icon and the cursor are located in (or shifted to) a specific location, to which some of the texts displayed on the display 160 are to be pasted, by a drag-and-drop operation. If so, the controller 110 controls to paste the selected text to the specific location in step 224.

By repeating steps 222 to 224, the user may paste at least one text in the list to his desired location.

The controller 110 may control to display a check box associated with each of at least one text in the list, select at least one or multiple texts based on the check boxes, and paste the selected multiple texts to the specific location. In this case, the controller 110 may control to paste the multiple texts in the selection order of the check boxes.

In step 225, the controller 110 determines if the edit icon and the cursor are located in (or shifted to) a remove area on the display 160 by dragging them after a text(s) was selected from the list. If so, the controller 110 controls to remove the selected text from the memory 130 in step 226.

By repeating steps 225 and 226, the user may remove at least one text included in the list.

The controller110 mat control to may display a check box associated with each of at least one text in the list, select at least one or multiple texts based on the check boxes, and comprehensively or collectively remove multiple texts by dragging the edit icon and the cursor to the remove area on the display 160.

In step 227, the controller 110 determines if a specific area on the display 160 is touched for a specific time or more. If so, the controller 110 controls to end the display of the edit menu window in step 228, thereby completing the text-editing process.

In the alternative, if a text among the at least one text in the list is touched for a specific time or more, the controller 110 may control to remove the text.

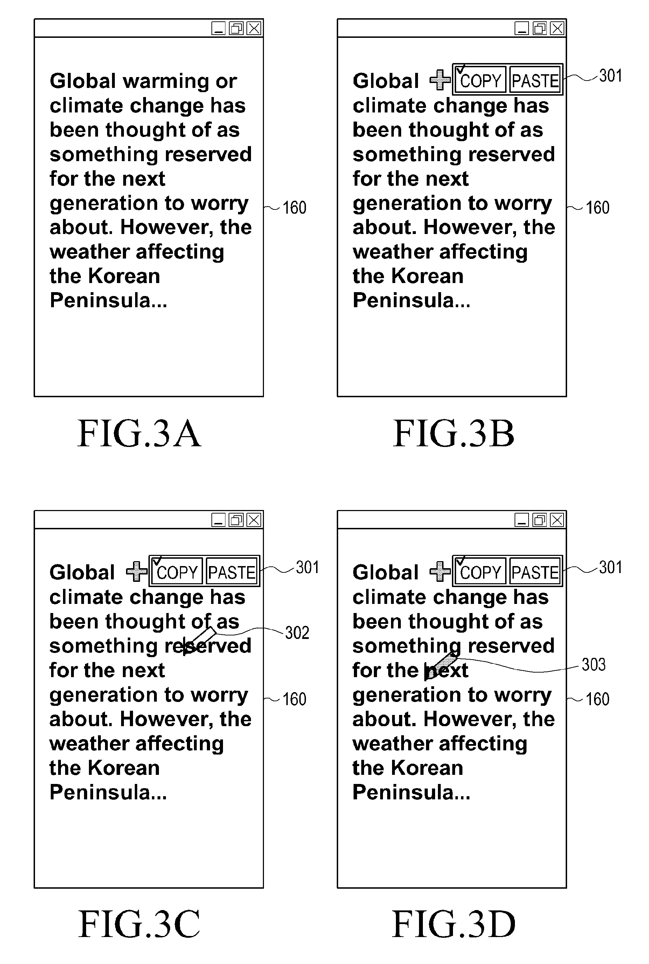

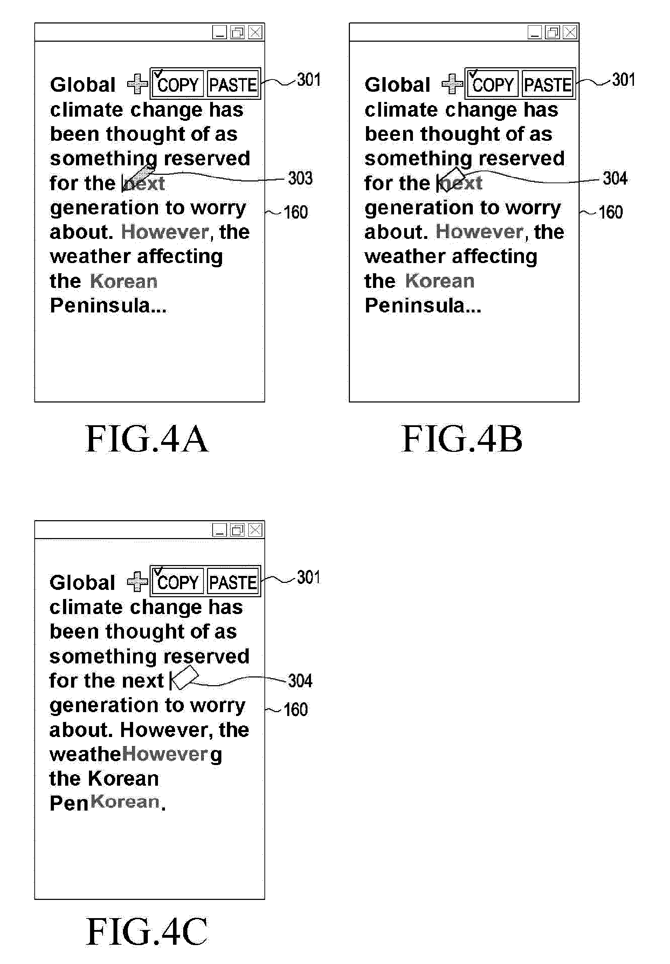

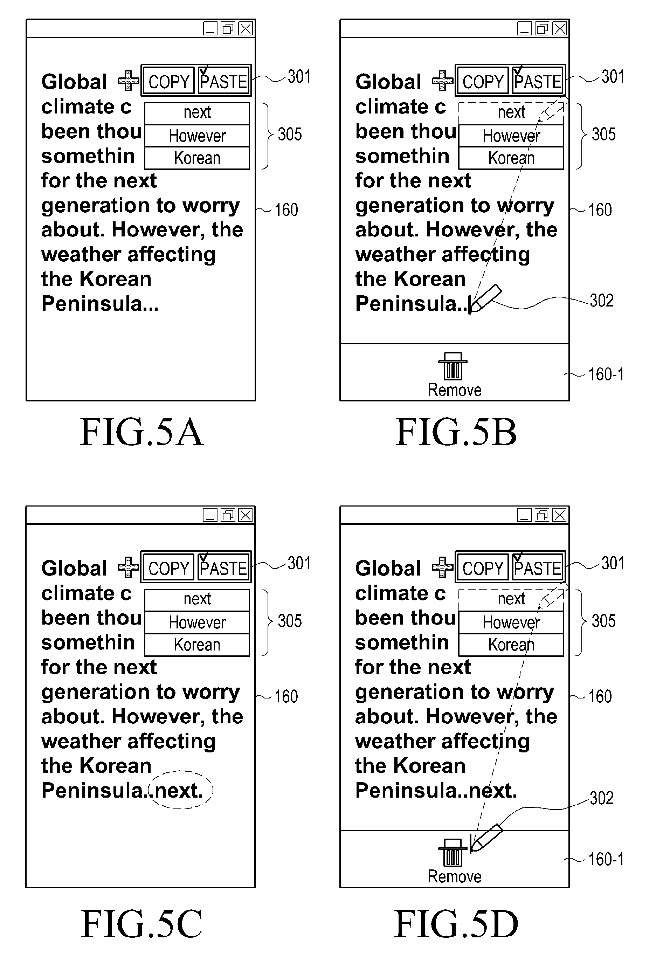

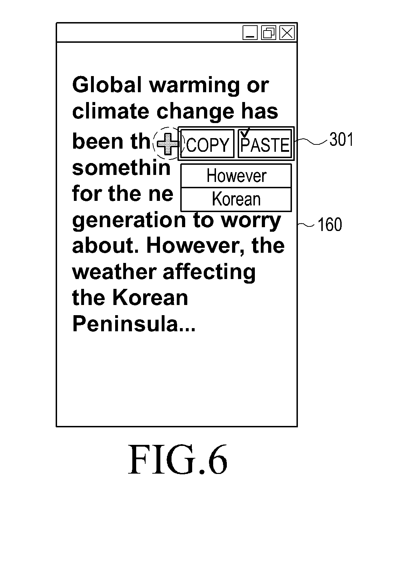

FIGs. 3A to 3F illustrate a copying process in a text-editing process for a mobile terminal according to an exemplary embodiment of the present invention. FIGs. 4A to 4C illustrate a canceling process in a text-editing process for a mobile terminal according to an exemplary embodiment of the present invention. FIGs. 5A to 5D illustrate a pasting process in a text-editing process for a mobile terminal according to an exemplary embodiment of the present invention. FIG. 6 illustrates a process of shifting a location of an edit menu in a text-editing process for a mobile terminal according to an exemplary embodiment of the present invention.

FIG. 3A illustrates the display 160 on which texts are displayed. If a specific area on the display 160 in FIG. 3A is input or touched for a specific time or more, or if a specific key mounted in the mobile terminal is input or pushed for a specific time or more, an edit menu window 301 is displayed as shown in FIG. 3B.

If a copy menu item is selected in the edit menu window 301 shown in FIG. 3B, the copy menu item is checked and activated as shown in FIG. 3C. Thereafter, if a specific area on the display 160 is touched, an edit icon in a fluorescent pen shape and a cursor 302 are displayed, and a text to be copied is selected by shifting the edit icon and the cursor 302.

The edit icon and the cursor 302 may be shifted with constant touch pressure.

If a specific time has elapsed after the edit icon and the cursor 302 were located on a text 'next' to be copied by shifting them, a color of the florescent pen representing the edit icon is changed and displayed as a copy icon, as shown in FIG. 3D.

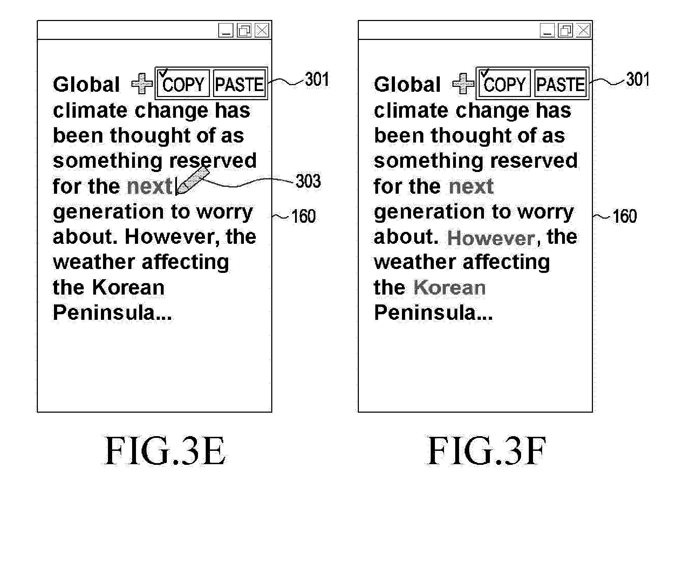

If the text 'next' is selected by dragging the copy icon and the cursor 303, a color of the selected text 'next' is changed as shown in FIG. 3E, and the selected text 'next' is stored in the memory 130.

By repeating the operation of FIG. 3E, the controller 110 may control to select multiple texts such as 'next', 'However' and 'Korean' as shown in FIG. 3F, change their color to indicate their copy, and store them in the memory 130.

If the copy icon 303 is located for a specific time or more on the text 'next' whose color was changed to indicate its copy in the copying process as shown in FIG. 4A, copy icon 303 expressed in the florescent pen shape is changed to cancel icon 304 expressed in an eraser shape during its display as shown in FIG. 4B.

If the text 'next' is selected by dragging the cancel icon and the cursor 304, a color of the selected text 'next' is changed to its original color to indicate the canceling of the copy as shown in FIG. 4C, and the text 'next' is removed from the memory 130.

If a paste menu item is selected in the edit menu window 301, the paste menu item is checked and activated as shown in FIG. 5A. At the same time, a list 305 of the multiple texts ('next', 'However' and 'Korean') stored in the copying process is displayed.

If the edit icon and the cursor 302 are located on a desired specific location by a drag-and-drop operation after the text 'next' was selected from the list as shown in FIG. 5B, the text 'next' is pasted to the specific location as shown in FIG. 5C.

If the edit icon and the cursor 302 are located on a remove area 106-1 on the display 160 by a drag-and-drop operation after the text 'next' was selected from the list as shown in FIG. 5D, the selected text 'next' is removed from the memory 130.

The edit menu window 301 is relocatable on the display 160, and the edit menu window 301 may be shifted by dragging-and-dropping a cross-shaped icon combined with the edit menu window 301 as shown in FIG. 6.

In the above exemplary embodiments of the present invention, a cursor along with corresponding icon (e.g. a copy icon, a cancel icon, an edit icon and so on) can be used to select a related text; however, alternatively, the present invention can achieve the selection of a text only by the corresponding icon (e.g. a copy icon, a cancel icon, an edit icon and so on) without displaying any cursor.

As is apparent from the foregoing description, exemplary embodiments of the present invention provide a text-editing method and apparatus for a mobile terminal, capable of allowing a user to conveniently edit texts by selecting multiple texts in a text-editing process of the mobile terminal.

Besides, the exemplary embodiments of present invention provide a text-editing method and apparatus for a mobile terminal, capable of providing a more familiar User Interface (UI) to a user by using an icon of a fluorescent pen, which is typically used to select texts in the real world, in a text-editing process of the mobile terminal.

It will be appreciated that embodiments of the present invention can be realized in the form of hardware, software or a combination of hardware and software. Any such software may be stored in the form of volatile or nonvolatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for editing a text in a mobile terminal, the method comprising:
a copying step of changing a color of at least one text selected by a copy icon if the copy step is selected while displaying texts on a display, and storing the at least one color-changed text; and
a pasting step of pasting a text selected from a list including at least one text stored in the copying step to a specific location on the display if the paste step is selected.

2. The method of claim 1, further comprising displaying the edit menu window on the display if a specific area on the display is touched for a specific time or more while displaying texts on the display.

3. The method of claim 1 or claim 2, wherein the copying step comprises:
displaying a cursor and an edit icon if a specific area on the display is touched;
changing the edit icon to the copy icon, if a specific time has elapsed after the cursor and the edit icon were located on a text among the texts being displayed on the display;
changing a color of the text if the text is selected by the cursor and the copy icon, and storing the color-changed text in a memory; and
changing a color of the at least one text by repeating the above three steps, and storing the at least one color-changed text in the memory.

4. The method of claim 3, wherein the edit icon is changed to the copy icon by a change in color.

5. The method of claim 3 or claim 4, further comprising:
changing the copy icon to a cancel icon, if a specific time has elapsed after the cursor and the copy icon were located on the color-changed text; and
changing a color of the text to an original color thereof if the color-changed text is selected by the cursor and the cancel icon, and removing the text from the memory.

6. The method of claim 5, wherein the copy icon is changed to the cancel icon by a change in shape.

7. The method of any preceding claim, wherein the pasting step comprises:
displaying at least one text stored in the copying step, in a list; and
pasting the text to a specific location to which the edit icon is shifted, if the cursor and the edit icon are shifted to the specific location on the display after the text was selected from the list.

8. The method of claim 7, further comprising removing the text from the memory if the cursor and the edit icon are shifted to a remove area on the display after the text was selected from the list.

9. An apparatus for editing a text in a mobile terminal, the apparatus comprising:
a display for displaying at least one text that is selected by a copy icon and
whose color is changed in a copying step, and for displaying a list including the at least one text in a pasting step; and
a controller for controlling to change a color of at least one text selected by the copy icon and to store the at least one color-changed text in the copying step,
and for controlling to paste a text selected from the list including the at least one text to a specific location on the display in the pasting step.

10. The apparatus of claim 9, wherein the controller controls to display an edit menu window including a copy menu item and a paste menu item if a specific area on the display, on which texts are being displayed, is touched for a specific time or more.

11. The apparatus of claim 9 or claim 10, wherein the controller controls to:
display a cursor and an edit icon if a specific area on the display is touched in the copying step;
change the edit icon to the copy icon, if a specific time has elapsed after the cursor and the edit icon were located on a text among the texts being displayed on the display; and
change a color of a text selected by the cursor and the copy icon, and store the color-changed text in a memory.

12. The apparatus of claim 11, wherein the edit icon is changed to the copy icon by a change in color.

13. The apparatus of claim 11 or claim 12, wherein the controller controls to:
change the copy icon to a cancel icon if a specific time has elapsed after the cursor and the copy icon were located on the color-changed text; and
change a color of the text to an original color thereof if the color-changed text is selected by the cursor and the cancel icon, and remove the text from the memory.

14. The apparatus of claim 13, wherein the copy icon is changed to the cancel icon by a change in shape.

15. The apparatus of any one of claims 9 to 14, wherein the controller controls to paste the text to a specific location to which an edit icon is shifted in the pasting step, if a cursor and an edit icon are shifted to a specific location on the display after the text was selected from the list including the at least one text stored in the copying step.

16. The apparatus of claim 15, wherein the controller controls to remove the text from a memory if the cursor and the edit icon are shifted to a remove area on the display after the text was selected from the list.
